# EUROPÄISCHE PATENTSCHRIFT

(11) **EP 0 904 527 B1**
(45) Veröffentlichungstag und Bekanntmachung des Hinweises auf die Patenterteilung: **03.05.2000**
(21) Anmeldenummer: 97929096.2
(22) Anmeldetag: 12.06.1997
(51) Int. Cl.: G01L 1/12, G01L 5/00

(54) **Linearantrieb mit einem magnetostriktiven Kraftsensor**
Linear drive with a magnetostrictive force sensor
Entraînement linéaire avec un capteur de force magnétostrictif

(30) Priorität: 14.06.1996 DE 19623741
(43) Veröffentlichungstag der Anmeldung: 31.03.1999
(73) Patentinhaber: Wittenstein Motion Control GmbH, 97999 Igersheim (DE)
(72) Erfinder: WITTENSTEIN, Manfred, D-97980 Bad Mergentheim (DE); SPOHR, Hans-Hermann, D-75365 Calw (DE)
(74) Vertreter: Patentanwalts-Partnerschaft Rotermund + Pfusch
(86) Internationale Anmeldenummer: DE9701182
(87) Internationale Veröffentlichungsnummer: WO9747953

(56) Entgegenhaltungen:
- EP-A- 0 142 110
- EP-A- 0 320 621
- EP-A- 0 656 500
- EP-A- 0 737 831
- WO-A-94/07118
- US-A- 4 924 713
- US-A- 4 977 782

## Beschreibung

Die Erfindung betrifft einen Linearantrieb mit einer Einrichtung zum Erfassen und Auswerten einer auf diesen einwirkenden Betriebskraft nach dem Oberbegriff des Patentanspruchs 1.

Ein solcher Linearantrieb ist aus US 4,977,782 bekannt. Die Einrichtung zum Erfassen und Auswerten einer auf den Antrieb einwirkenden Betriebskraft ist dort eine in eine Schwachstelle des Gehäuses eingebaute Drehmomentmeßeinrichtung.

Aus der älteren nicht vorveröffentlichten Anmeldung EP 0 737 831 A1 ist ebenfalls eine gattungsgemäße Einrichtung bereits beschrieben.

Die Erfindung beschäftigt sich mit dem Problem, eine möglichst einfach aufgebaute, einwandfrei und mit hoher Genauigkeit arbeitende gattungsgemäße Einrichtung zu schaffen.

Diesen Zweck erfüllt eine gattungsgemäße Einrichtung mit den kennzeichnenden Merkmalen des Patentanspruchs 1.

Eine zweckmäßige Ausgestaltung ist Gegenstand des Anspruchs 2. Durch eine derartige Kombination und Anordnung mehrerer magnetostriktiver Sensoren lassen sich quer zur Längsachse auftretende Kräfte messen, die für die Betriebssicherheit eines beispielsweise als Spindeltrieb ausgebildeten Linearantriebs besonders schädlich sind.

Insbesondere ein elektromotorisch angetriebener erfindungsgemäßer Linearantrieb läßt sich in vorteilhafter Weise in Abhängigkeit der Signale des magnetostriktiven Kraftsensors steuern und /oder regeln.

Magnetostriktive Kraftsensoren sind an sich bekannt, weshalb an dieser Stelle keine weiteren Erläuterungen hierzu notwendig sind.

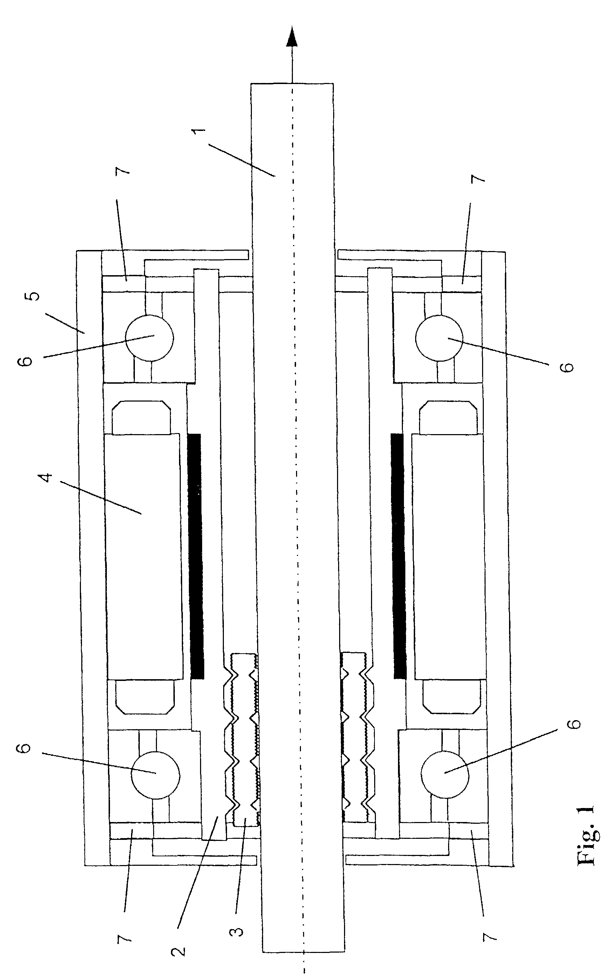

Ein Ausführungsbeispiel der Erfindung ist in der einzigen Fig. 1 der Zeichnung dargestellt.

Diese zeigt in schematischer Darstellung einen Schnitt durch einen Spindeltrieb als Beispiel eines Linearantriebs.

Der Spindeltrieb ist ein Planeten-Rollspindeltrieb, bei dem eine Gewindestange 1 verdrehungsfrei von einer Spindelmutter 2 über Planetenrollen 3 angetrieben wird. Die Spindelmutter 2 ist integrierter Bestandteil des Rotors eines ortsfesten elektrischen Antriebsmotors 4.

In dem ortsfesten Gehäuse 5 des Spindeltriebs ist der Rotor des Elektromotors 3 zusammen mit der Spindelmutter 2 in Wälzlagern 6 gelagert. Die jeweils äußeren Lagerringe der Wälzlager 6 sind in dem Getriebe-Gehäuse 5 im wesentlichen verdrehfest längsverschiebbar gelagert. Bei einem Verschieben der Gewindestange 1 in Richtung des eingezeichneten Pfeiles tritt in den äußeren sich an dem Getriebe-Gehäuse 1 abstützenden Lagerringen eine Reaktionskraft in Längsrichtung der Gewindestange 1 auf. Diese Reaktionskraft wird durch jeweils mindestens einen magnetorestriktiven Kraftmesser (7) ermittelt, die zwischen dem in der Zeichnung jeweils äußeren Lagerring des Lagers 6 und einem radialen Anschlag innerhalb des Spindeltrieb-Gehäuses 5 zur axialen Kraftaufnahme angebracht sind.

Die ermittelten Signale dieser Kraftsensoren werden elektronisch ausgewertet und zur Steuerung und/oder Regelung des Spindelantriebs eingesetzt.

Auf diese Weise ist es möglich, den Spindeltrieb vor einer Kraftüberlastung dadurch zu schützen, daß der Spindelantrieb abgestellt oder dessen Drehmoment verringert wird.

Über diese Kraftsensoren ist es ferner möglich, durch den Spindeltrieb Kräfte größenmäßig geregelt zu übertragen.

## Patentansprüche

1. Linearantrieb
- mit einem Verschiebeteil (1) und einem Gehäuse (5) für Antriebsmittel, die mit dem Verschiebeteil zusammenwirken und um eine gemeinsame Achse des Verschiebeteils und des Gehäuses rotieren,
- mit einer die Antriebsmittel in dem Gehäuse lagernden Lagereinrichtung (6) mit mindestens einem ersten, sich an den Antriebsmitteln und mindestens einem zweiten sich an dem Gehäuse abstützenden Lagerteil und
- mit einer Einrichtung zum Erfassen und Auswerten einer auf den Linearantrieb einwirkenden Betriebskraft,
**dadurch gekennzeichnet**,
daß die Einrichtung zum Erfassen und Auswerten der auf den Linearantrieb einwirkenden Betriebskraft als ein zwischen dem mindestens einen zweiten Lagerteil und dem Gehäuse (5) mit Bezug auf das Gehäuse (5) und die Lagereinrichtung (6) axial eingespannter magnetostriktiver Kraftsensor (7) ausgebildet ist, wobei das mindestens eine zweite Lagerteil gegenüber dem Gehäuse (5) im wesentlichen verdrehfest längsverschiebbar ist.

2. Linearantrieb nach Anspruch 1,
**dadurch gekennzeichnet**,
daß mehrere Kraftsensoren (7) über den Umfang des zweiten Lagerteils verteilt zur Erfassung von Querbelastungen vorgesehen sind.

3. Linearantrieb, insbesondere elektromotorisch angetrieben, nach Anspruch 1 oder 2,
**gekennzeichnet**,
durch eine Steuerung und/oder Regelung des Antriebs in Abhängigkeit der Signale des magnetostriktiven Kraftsensors (7).

## Claims

1. Linear drive
- having a displaceable part (1) and a housing (5) for drive means which interact with the displaceable part and rotate about a common axis of the displacement part and of the housing,
- having a bearing device (6), which supports the drive means in the housing and has at least a first bearing part supported on the drive means and at least a second bearing part supported on the housing, and
- having a device for sensing and evaluating an operational force acting on the linear drive,
characterized in that the device for sensing and evaluating the operational force acting on the linear drive is designed as a magnetostrictive force sensor (7) which is clamped in axially with respect to the housing (5) and the bearing device (6) between the at least one second bearing part and the housing (5), the at least one second bearing part, being longitudinally displaceable, in an essentially non-rotatable fashion with respect to the housing(5).

2. Linear drive according to Claim 1, characterized in that a plurality of force sensors (7) are provided distributed over the circumference of the second bearing part in order to sense transverse loads.

3. Linear drive, in particular electromotively actuated, according to Claim 1 or 2, characterized by means of an open-loop and/or closed-loop control of the drive as a function of the signals of the magnetostrictive force sensor (7).

## Revendications

1. Entraînement linéaire
- comprenant une partie mobile (1) et un boîtier (5) comme moyens d'entraînement qui coopèrent avec la partie mobile et tournent autour d'un axe commun à la partie mobile et au logement,
- comprenant un dispositif de palier (6) maintenant les moyens d'entraînement dans le boîtier avec au moins une première partie de palier reposant en appui sur les moyens d'entraînement et au moins une deuxième partie reposant en appui sur le boîtier, et
- comprenant un dispositif pour l'enregistrement et l'évaluation d'une force motrice agissant sur l'entraînement linéaire,
caractérisé en ce que
le dispositif pour l'enregistrement et l'évaluation de la force motrice agissant sur l'entraînement linéaire est réalisé sous la forme d'un capteur de force magnétostrictif (7) fixé par rapport au boîtier (5) et au dispositif de palier (6) de manière axiale entre la deuxième partie de palier et le logement (5), d'où il résulte que la deuxième partie de palier est apte à effectuer essentiellement un déplacement dans le sens longitudinal et sans torsion par rapport au boîtier (5).

2. Entraînement linéaire selon la revendication 1, caractérisé en ce que
plusieurs capteurs de force (7) sont répartis sur le pourtour de la deuxième partie de palier et sont prévus pour l'enregistrement de charges transversales.

3. Entraînement linéaire, en particulier entraîné par un moteur électrique, selon la revendication 1 ou 2 caractérisé
par une commande et/ou une régulation de l'entraînement en fonction des signaux du capteur de force magnétostrictif (7).
